# FASCICULE DE BREVET EUROPEEN

(11) **EP 0 624 942 B1**
(45) Date de publication et mention de la délivrance du brevet: **23.07.1997**
(21) Numéro de dépôt: 94400754.1
(22) Date de dépôt: 06.04.1994
(51) Int. Cl.: H02G 15/18, B29C 61/10

(54) **Manchon thermorétractable fendu**
Wärmeschrumpfbare geschlitzte Muffe
Heatshrinkable slit sleeve

(30) Priorité: 09.04.1993 FR 9304268
(43) Date de publication de la demande: 17.11.1994
(73) Titulaire: SAT (Société Anonyme de Télécommunications), 75116 Paris (FR)
(72) Inventeur: Magneron, Sébastien, F-77130 Varennes sur Seine (FR); Arette-Hourquet, Damien, F-77130 Cannes-Ecluse (FR)
(74) Mandataire: Fruchard, Guy

(56) Documents cités:
- EP-A- 0 111 243
- EP-A- 0 133 337
- DE-U- 8 033 862
- FR-A- 2 374 463
- GB-A- 2 113 019
- LU-A- 59 432
- PATENT ABSTRACTS OF JAPAN vol. 6, no. 1 (M-105) (879) 7 Janvier 1982 & JP-A-56 126 128 (SUMITOMO)

## Description

La présente invention concerne un manchon thermorétractable fendu.

On sait que les manchons thermorétractables sont de plus en plus utilisés pour recouvrir des objets, en particulier pour recouvrir une jonction entre deux câbles afin de réaliser une protection étanche de la jonction. Chaque fois que cela est possible compte tenu de l'environnement, un manchon cylindrique dans un état expansé est enfilé sur l'objet puis rétracté pour s'appliquer de façon uniforme tout autour de l'objet. Toutefois, il arrive fréquemment qu'il ne soit pas possible d'engager un manchon cylindrique sur l'objet à protéger. C'est le cas en particulier des câbles lorsqu'une extrémité du câble n'est pas accessible, lorsqu'une jonction est effectuée sur un câble dont la longueur accessible est insuffisante pour permettre d'engager un manchon thermorétractable avant d'effectuer la jonction, ou sur une jonction de câble lorsque la jonction ne porte que sur une partie des conducteurs du câble et ne justifie donc pas que l'ensemble du câble soit sectionné pour permettre l'engagement d'un manchon cylindrique sur le câble. Dans ces cas, on utilise un manchon thermorétractable fendu longitudinalement qui peut ainsi être engagé latéralement pour venir recouvrir la jonction à protéger. Au départ, le manchon thermorétractable fendu se présente sous forme d'une bande de matériau thermorétractable plus ou moins mise en forme et après l'avoir disposée autour d'une jonction de câble, il est donc nécessaire de relier les bords longitudinaux de cette bande afin de réaliser un manchon cylindrique autour de la jonction de câble.

On connaît des manchons thermorétractables fendus dans lesquels l'organe de liaison des bords longitudinaux est formé par une réglette en C qui est engagée sur des portions de liaison adjacentes à des bords longitudinaux de la bande de matériau thermorétractable, ces portions de liaison s'étendant sensiblement radialement en regard l'une de l'autre. Pour assurer un maintien des portions de liaison l'une contre l'autre au moyen de la réglette en C, il est nécessaire d'une part de prévoir des portions de liaison ayant un profil complémentaire du profil interne de la réglette, ce qui augmente le coût de réalisation de la bande de matériau thermorétractable, et il est d'autre part nécessaire de faire coulisser longitudinalement la réglette pour l'engager sur les portions de liaison, ce qui suppose un dégagement important dans une direction longitudinale du manchon. En outre, lors de la rétraction, le matériau thermorétractable se rétracte à volume constant, c'est-à-dire que l'épaisseur de la bande de matériau thermorétractable augmente tandis que sa surface diminue. La forme des portions de liaison se modifie donc considérablement et il existe alors un risque que ces portions de liaison s'échappent de la réglette en C et n'assurent plus un maintien étanche des bords longitudinaux de la bande de matériau thermorétractable.

On connaît également du document EP-A-111 243 à propos de l'art antérieur décrit dans ce document, un manchon thermorétractable fendu comportant une bande de matériau thermorétractable ayant deux portions de liaison adjacentes à des bords longitudinaux de la bande, ces portions de liaison s'étendant sensiblement radialement en regard l'une de l'autre, et un organe de liaison des portions de liaison, comportant une première et une seconde réglettes disposées de part et d'autre des portions de liaison, ces réglettes étant réunies par des rivets traversant les portions de liaison de la bande.

Ainsi que l'indique ce document, le manchon ne comporte aucun moyen pour maintenir les portions de liaison l'une contre l'autre de sorte qu'il est difficile d'assurer un contact intime entre les portions de liaison.

Il est également prévu dans ce document de réunir les portions de liaison par des réglettes articulées auxquelles sont associés des ressorts montés pour enjamber les portions de liaison. Un tel dispositif présente des inconvénients semblables à ceux dans lesquels l'organe de liaison est formé par une réglette en C.

On propose selon l'invention un manchon thermorétractable fendu comportant une bande de matériau thermorétractable ayant deux portions de liaison adjacentes à des bords longitudinaux de la bande, ces portions de liaison s'étendant sensiblement radialement en regard l'une de l'autre, et un organe de liaison des portions de liaison comportant une première et une seconde réglette disposées de part et d'autre des portions de liaison, ces réglettes étant réunies par des éléments de liaison traversant les portions de liaison de la bande, dans lequel les réglettes sont associées à des organes de butée disposés pour que l'écartement maximum des réglettes soit inférieur à l'épaisseur des portions de liaison après rétraction du manchon.

Ainsi, lors de la rétraction de la bande thermorétractable, l'augmentation d'épaisseur de cette bande se traduit par une compression très forte des portions de liaison qui sont ainsi maintenues l'une contre l'autre sans qu'il soit nécessaire d'exercer aucune force de compression par un organe externe.

Selon une version avantageuse de l'invention, les éléments de liaison ont une longueur adaptée à laisser un jeu entre les réglettes et les portions de liaison de la bande de matériau thermorétractable avant une rétraction du manchon. La mise en place des réglettes est alors effectuée de façon très aisée tout en obtenant une étanchéité satisfaisante entre les portions de liaison lors de la rétraction du manchon.

Selon un mode de réalisation préféré de l'invention, les éléments de liaison comportent des ergots fixés à la première réglette et coopérant avec des encoches curvilignes réalisées dans la seconde réglette. On réalise ainsi un montage en baïonnette qui permet d'engager aisément les réglettes latéralement puis de les bloquer afin qu'elles résistent aux forces de compression qui sont développées lors de la rétraction.

Selon encore une autre caractéristique avantageuse de l'invention, le manchon comporte une bande de matériau thermosoudable disposée entre les portions de liaison. Lors de la rétraction, la bande de matériau thermosoudable est fondue par la chaleur apportée pour provoquer la rétraction et elle est simultanément comprimée par la mise en compression des portions de liaison de sorte que l'on obtient une soudure effective des portions de liaison entre elles.

D'autres caractéristiques et avantages de l'invention apparaîtront à la lecture de la description qui suit d'un mode de réalisation particulier non limitatif de l'invention en liaison avec les figures ci-jointes parmi lesquelles :
- la figure 1 est une vue en perspective éclatée du manchon selon l'invention avant sa mise en place sur un objet à protéger,
- la figure 2 est une vue en coupe partielle agrandie selon le plan II de la figure 1,
- la figure 3 est une vue en coupe partielle analogue à celle de la figure 2 après rétraction du manchon.

En référence aux figures, le manchon thermorétractable fendu selon l'invention comporte une bande de matériau thermorétractable 1 qui est obtenue par exemple en réalisant une fente longitudinale dans un manchon cylindrique thermorétractable dans un état expansé, ou en découpant une bande rectangulaire dans une feuille de matériau thermorétractable dans un état étiré. La bande de matériau thermorétractables 1 comporte deux portions de liaison 2 adjacentes à des bords longitudinaux 3 de la bande 1. La bande 1 est de préférence formée à chaud selon une forme sensiblement cylindrique ayant un axe s'étendant parallèlement aux bords longitudinaux 3, les portions de liaison 2 s'étendant sensiblement radialement en regard l'une de l'autre. Les portions de liaison 2 sont percées de trous 4 régulièrement espacés dont l'utilité sera vue plus loin. Selon le mode de réalisation préféré illustré, une bande de matériau thermosoudable 5 est disposée entre les portions de liaison 2. La bande de matériau thermosoudable 5 est par exemple en polyéthylène. Dans ce cas, la bande de matériau thermorétractable 1 est réalisée dans un matériau soudable au polyéthylène, par exemple un matériau ayant une composition décrite dans le brevet français de SILEC publié sous le No 2.345.482.

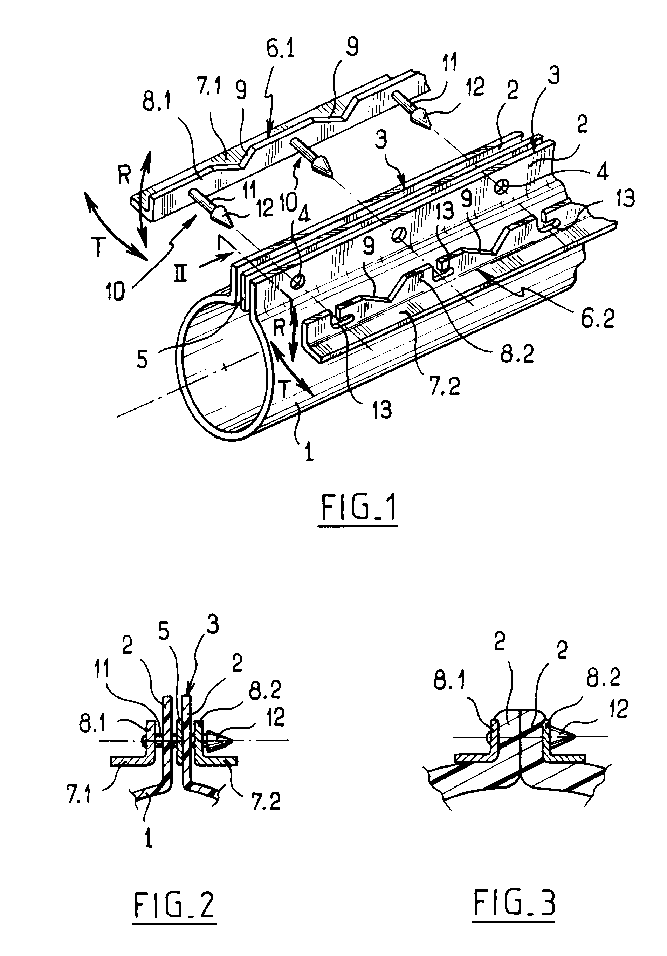

Par ailleurs, le manchon thermorétractable fendu selon l'invention est associé à un organe de liaison comportant une première réglette en L portant la référence numérique générale 6 et la référence numérique particulière 6.1, et une seconde réglette en L portant la même référence générale 6 que la première réglette et la référence particulière 6.2. Les réglettes 6 en L comportent des ailes 7, respectivement 7.1 pour la réglette 6.1 et 7.2 pour la réglette 6.2, qui s'étendent selon une direction sensiblement tangentielle, et des ailes 8, respectivement 8.1 pour la réglette 6.1 et 8.2 pour la réglette 6.2, qui s'étendent selon une direction sensiblement radiale. Les ailes 7 assurent une rigidité des réglettes 6 dans une direction sensiblement tangentielle comme indiqué par les flèches T sur la figure 1, tandis que les ailes 8 comportent des encoches 9 qui permettent une déformation des réglettes 6 selon une direction sensiblement radiale comme indiqué par les flèches R sur la figure 1. Afin d'avoir une résistance suffisante, les réglettes 6 sont de préférence des réglettes métalliques en laiton ou en acier inoxydable. La première réglette 6.1 comporte en outre des ergots généralement désignés en 10 comprenant une tige 11 fixée à l'aile 8.1, par exemple par rivetage et s'étendant perpendiculairement à celle-ci, et une tête conique 12, la base de la tête conique 12 ayant un diamètre supérieur à celui de la tige 11. La seconde réglette 6.2 comporte des encoches curvilignes 13 réalisées dans l'aile 8.2 selon des espacements identiques à ceux des ergots 10 et aux trous 4 dans les portions de liaison 2. Les ensembles curvilignes 13 débouchent le long du bord supérieur de l'aile 8.2.

Lors de la mise en place du manchon selon l'invention, la bande de matériau thermorétractable 1 est disposée autour de l'objet à protéger puis la première réglette 6.1 est mise en place en engageant les ergots 10 dans les trous 4 des portions de liaison 2. Le diamètre des trous 4 est de préférence très légèrement inférieur au diamètre de la base des têtes 12 des ergots afin de maintenir la réglette 6.1 en place lorsque les ergots 10 ont été passés à travers les trous 4. La réglette 6.2 est alors mise en place en engageant les ouvertures 13 autour des tiges 11 des ergots 10 puis en décalant longitudinalement la réglette 6.2 afin d'éviter que celle-ci ne s'échappe. Afin que cette mise en place soit aisée, on prévoit de préférence des tiges 11 qui ont une longueur légèrement supérieure à la somme des épaisseurs des matériaux à travers lesquels les ergots 10 sont engagés. Par exemple, pour une bande de matériau thermorétractable dont les portions de liaison 2 ont une épaisseur de 2 mm avant rétraction associées à une bande thermosoudable d'une épaisseur de quelques centièmes de millimètre, et à une seconde réglette 6.2 dont l'aile 8.2 a une épaisseur de 1 mm, on prévoit des ergots 10 dont la tige 11 a une longueur de 7 mm. La différence, soit environ 2 mm, laisse un jeu qui se répartit au hasard entre les réglettes et les portions de liaison 2 de la bande de matériau thermorétractable comme illustré par la figure 2. Le manchon selon l'invention peut donc être mis en place sans contrainte avant rétraction.

Le manchon selon l'invention est alors rétracté par des procédés conventionnels, par exemple en utilisant un flux d'air chaud. Lors de la rétraction, la bande de matériau thermorétractable 1 se rétracte à volume constant, c'est-à-dire que la réduction de la surface de la bande, laquelle réalise une réduction du diamètre du manchon formé, se compense par une augmentation de l'épaisseur selon un coefficient qui est généralement de l'ordre de 2,5 à 5. En particulier, l'épaisseur des portions de liaison 2 tend à augmenter dans les mêmes proportions que le reste de la bande de matériau thermorétractable, c'est-à-dire que dans l'exemple indiqué ci-dessus et pour un coefficient de rétraction de 2,5, les portions de liaison 2 devraient chacune atteindre une épaisseur de 5 mm de sorte que l'épaisseur totale entre les ailes 8.1 et 8.2 des réglettes 6.1 et 6.2 devrait être de 10 mm. La longueur de la tige 11 des ergots 10 étant inférieure à cette valeur, la rétraction des portions de liaison 2 provoque un déplacement de l'aile 8.2 de la réglette 6.2 selon une direction longitudinale des tiges 11 jusqu'à ce que l'aile 8.2 soit en butée contre la base des têtes 12 des ergots 10. Les ergots 10 maintiennent alors une distance constante entre les ailes 8.1 et 8.2 et une rétraction ultérieure de la bande de matériau thermorétractable, c'est-à-dire une augmentation de son épaisseur, provoque une mise en pression des portions de liaison 2 entre les ailes 8.1 et 8.2 de sorte que la bande de matériau thermosoudable 5 est écrasée en même temps qu'elle est fondue par la chaleur apportée, ce qui provoque une soudure intime des portions de liaison 2 comme illustré par la figure 3. En outre, l'augmentation d'épaisseur des portions de liaison 2 se traduit par un débordement du matériau thermorétractable dans les encoches 9 de sorte que les réglettes 6 sont totalement ancrées dans les portions de liaison 2 et l'on évite ainsi un déchirement des portions de liaison 2 au niveau des tiges 11 des ergots 10.

Bien entendu l'invention n'est pas limitée au mode de réalisation décrit et on peut y apporter des variantes de réalisation sans sortir du cadre de l'invention tel que défini par les revendications. En particulier, bien que les réglettes aient été illustrées sous forme de cornières en L, on pourra utiliser des réglettes ayant des formes variées appropriées à l'objet sur lequel le manchon thermorétractable doit être appliqué. A ce propos, on notera également que les réglettes peuvent être associées par des moyens encliquetables ou par des fentes curvilignes qui ne débouchent pas sur un bord de la réglette, les fentes curvilignes ayant par exemple une partie de dimension suffisante pour permettre le passage des têtes 12 des ergots 10.

## Revendications

1. Manchon thermorétractable fendu comportant une bande de matériau thermorétractable (1) ayant deux portions de liaison (2) adjacentes à des bords longitudinaux (3) de la bande, ces portions de liaison (2) s'étendant sensiblement radialement en regard l'une de l'autre, et un organe de liaison des portions de liaison, comportant une première et une seconde réglettes (6) disposées de part et d'autre des portions de liaison (2), ces réglettes (6) étant réunies par des éléments de liaison (10) traversant les portions de liaison (2) de la bande (1), caractérisé en ce que les réglettes sont associées à des organes de butée (12) disposés pour que l'écartement maximum des réglettes soit inférieur à l'épaisseur des portions de liaison après rétraction du manchon.

2. Manchon selon la revendication 1, caractérisé en ce que les éléments de liaison (10) ont une longueur adaptée à laisser un jeu entre les réglettes (6) et les portions de liaison (2) de la bande de matériau thermorétractable avant une rétraction du manchon.

3. Manchon selon la revendication 1 ou la revendication 2, caractérisé en ce que les éléments de liaison sont constitués par des ergots (10) ayant une extrémité fixée à la première réglette (6.1) et une extrémité opposée portant une tête de butée (12).

4. Manchon selon la revendication 3, caractérisé en ce que les ergots (10) fixés à la première réglette (6.1) coopèrent avec des encoches curvilignes (13) réalisées dans la seconde réglette (6.2).

5. Manchon selon l'une des revendications 1 à 4, caractérisé en ce qu'il comporte une bande de matériau thermosoudable (5) disposée entre les portions de liaison (2).

## Patentansprüche

1. Wärmeschrumpfbare geschlitzte Hülle aus einem Streifen (1) aus wärmeschrumpfbarem Material mit zwei den Längsrändern (3) des Streifens benachbarten Verbindungsabschnitten (2), die sich im wesentlichen radial erstrecken und sich gegenüberliegen, und mit einer Vorrichtung zum Verbinden der Verbindungsabschnitte, die eine erste und eine zweite Leiste (6) umfaßt, die beiderseits der Verbindungsabschnitte (2) angeordnet und durch Verbindungselemente (10), die sich durch die Verbindungsabschnitte (2) des Streifens (1) erstrecken, verbunden sind, dadurch **gekennzeichnet**, daß die Leisten mit Anschlagelementen (12) verbunden sind, die so ausgebildet sind, daß der größtmögliche Abstand der Leisten geringer ist als die Dicke der Verbindungsabschnitte nach dem Schrumpfen der Hülle.

2. Hülle nach Anspruch 1, dadurch **gekennzeichnet**, daß die Länge der Verbindungselemente (10) so gewählt ist, daß vor dem Schrumpfen der Hülle zwischen den Leisten (6) und den Verbindungsabschnitten (2) des Streifens aus wärmeschrumpfbarem Material ein Spielraum gelassen ist.

3. Hülle nach Anspruch 1 oder Anspruch 2, dadurch **gekennzeichnet**, daß die Verbindungselemente Zapfen (10) sind, die mit einem Ende an der ersten Leiste (6.1) befestigt sind und am anderen Ende einen Anschlagkopf (12) tragen.

4. Hülle nach Anspruch 3, dadurch **gekennzeichnet**, daß die an der ersten Leiste (6.1) befestigten Zapfen (10) mit in der zweiten Leiste (6.2) ausgebildeten kurvenförmigen Aussparungen (13) zusammenwirken.

5. Hülle nach einem der Ansprüche 1 bis 4, dadurch **gekennzeichnet**, daß sie einen Streifen (5) aus heißsiegelfähigem Material enthält, der zwischen den Verbindungsabschnitten (2) angeordnet ist.

## Claims

1. A split heat-shrink sleeve comprising a strip of heat-shrink material (1) having two uniting portions (2) adjacent to longitudinal edges (3) of the strip, said uniting portions (2) extending substantially radially and facing each other, and a member for uniting the uniting portions, said member comprising first and second bars (6) disposed on either side of the uniting portions (2), said bars (6) being fastened together by uniting elements (10) passing through the uniting portions (2) of the strip (1), characterized in that the bars are associated with abutment members (12) disposed to ensure that the maximum spacing between the bars is less than the thickness of the uniting portions after the sleeve has shrunk.

2. A sleeve according to claim 1, characterized in that the uniting elements (10) are of a length that is suitable for leaving clearance between the bars (6) and the uniting portions (2) of the strip of heat-shrink material prior to the sleeve being shrunk.

3. A sleeve according to claim 1 or claim 2, characterized in that the uniting elements are constituted by pegs (10) having one end fixed to the first bar (6.1) and an opposite end carrying an abutment head (12).

4. A sleeve according to claim 3, characterized in that the pegs (10) are fixed to the first bar (6.1) co-operate with curvilinear notches (13) formed in the second bar (6.2).

5. A sleeve according to any one of claims 1 to 4, characterized in that it includes a strip of hot-weld material (5) disposed between the uniting portions (2).
